# FASCICULE DE BREVET EUROPEEN

(11) **EP 0 435 783 B1**
(45) Date de publication et mention de la délivrance du brevet: **01.06.1994**
(21) Numéro de dépôt: 90420532.5
(22) Date de dépôt: 11.12.1990
(51) Int. Cl.: D04H 1/46

(54) **Matériau textile complexe utilisable pour le renforcement de résines**
Textilverbundmaterial für die Harzverstärkung
Textile material laminate usable for reinforced resin

(30) Priorité: 22.12.1989 FR 8917393
(43) Date de publication de la demande: 03.07.1991
(73) Titulaire: ETABLISSEMENTS LES FILS D'AUGUSTE CHOMARAT & CIE. Société Anonyme, F-75008 Paris (FR)
(72) Inventeur: Fourezon, André, F-07160 Le Cheylard (FR)
(74) Mandataire: Laurent, Michel

(56) Documents cités:
- EP-A- 0 285 533
- FR-A- 1 281 440
- FR-A- 2 034 787
- GB-A- 765 153

## Description

Dans le domaine de la réalisation de matériaux à base de résine renforcée par une structure fibreuse, matériaux qui dans la suite de la description, seront désignés par l'expression "matériaux composites", outre les fibres conventionnelles telles que les fibres de verre utilisées depuis des décennies, il a maintenant été proposé d'utiliser des fibres dites "à hautes caractéristiques mécaniques", notamment des fibres aramide, des fibres de carbone.. .

En général, de tels renforts textiles à base de fibres à hautes caractéristiques mécaniques se présentent sous la forme de tissus équilibrés ou non. Ces tissus ont cependant un inconvénient par le fait qu'ils se déforment très facilement, ce qui a pour conséquence, lors de la réalisation des matériaux composites, d'avoir une désorientation des fibres et, par suite, des caractéristiques non homogènes.

Par ailleurs, il a été proposé depuis fort longtemps de réaliser des tissus de renforcement dits mixtes, tel que cela ressort notamment du FR-A-2 034 787 afin de combiner les propriétés spécifiques de différents types de matière. Ainsi dans le document précité, on réalise un tissu comportant en chaîne des mèches de fibres de verre et de fibres de carbone alternées et liées entre elles par des trames de liage.

Avec une telle solution, il est cependant difficile d'obtenir des renforts épais.

On connait également des complexes mixtes constitués de feutres aiguilletés à base d'un mélange de fibres tel que cela ressort du FR-A-2 248 937. De tels feutres, s'ils ont comme caractéristiques avantageuses de pouvoir être facilement mis en forme, ont cependant comme inconvénients de ne pas communiquer des résistances élevées dans le sens long, travers ou autre.

Or on a trouvé, et c'est ce qui fait l'objet de la présente invention, un perfectionnement apporté aux renforts textiles sous forme de tissus à base de fibres aramides (ou tout autre matériau similaire) qui non seulement, permet de conserver dans le matériau composite les caractéristiques desdites fibres, mais également améliore les propriétés d'adhérence de ladite matière avec la résine, plus particulièrement lorsqu'il s'agit d'une résine polyester, et élimine tout risque de délaminage pouvant se produire.

D'une manière générale, le matériau textile complexe selon l'invention pour la réalisation d'articles composites est constitué d'une structure multicouches, les différentes couches étant reliées entre elles par aiguilletage (technique utilisée depuis des décennies pour lier ensemble plusieurs structures textiles), et il se caractérise en ce qu'il est constitué d'au moins deux couches tissées:
- dont l'une est à base de fils (chaîne et trame) à hautes caractéristiques mécaniques, aramide notamment;
- et dont l'autre est à base de fils de verre à filaments continus;
   les deux couches tissées étant liées entre elles par aiguilletage, de telle sorte qu'une partie minoritaire des fibres à hautes caractéristiques mécaniques soient implantées à l'intérieur de la structure tissée en verre.

Pour obtenir de bons résultats, il a été constaté qu'il fallait utiliser un aiguilletage léger ne détériorant pas la structure en fibres à haute caractéristiques mécaniques et que, par ailleurs, les fils élémentaires tant de la nappe de verre que de la nappe de fibres à haute caractéristiques mécaniques, doivent être des fils sans torsion, présentant une structure relativement plane et aérée.

Un tel matériau complexe permet d'obtenir des matériaux composites, notamment à base de résine polyester, présentant d'excellentes caractéristiques par le fait que l'on constate que l'on élimine les risques de délaminage, il est possible de réaliser des empilements importants de renforts et que, par ailleurs, l'orientation des fils élémentaires n'est pas perturbée lors des manipulations, lesdits filaments étant maintenus parfaitement positionnés contre le tissu support de verre.

Pour réaliser un tel complexe, on utilisera tout type de matériel d'aiguilletage connu, tel que par exemple des aiguilleteuses à aiguilles à barbes, des aiguilleteuses à jets de fluide (air ou eau). Une telle technique étant conventionnelle, elle ne sera donc pas décrite en détail dans la description par mesure de simplification.

### Exemple

On réalise un matériau complexe pour la réalisation d'un article composite conforme à l'invention à partir de deux tissus, dont l'un est à base de fils de verre et l'autre à base de fils à hautes caractéristiques mécaniques, ces deux tissus étant associés par aiguilletage et ce, de telle sorte que l'action des aiguilles soit telle qu'elle fasse pénétrer une partie minoritaire des fils à hautes caractéristiques mécaniques à l'intérieur du support tissé en fils de verre.

Le tissu en verre est un tissu lâche, d'armure toile, constitué de mèches de verre tissées à raison d'environ une mèche par centimètre en chaîne et deux mèches par centimètre en trame, à raison de 420 grammes par mètre carré de fils de chaîne pour 420 grammes par mètre carré de fils de trame.

Le tissu en fils à hautes caractéristiques mécaniques est, quant à lui, également un tissu à armure toile, et est réalisé à partir de fils commercialisés sous la marque "Kevlar" ® de la Société DU PONT DE NEMOURS, se présentant également sous la forme de mèches, mais la densité en chaîne et en trame étant plus élevée que pour le support en verre étant, dans le cas présent, d'environ trois fils de chaîne et de trois fils de trame par centimètre, la quantité de fils de chaîne et de trame étant équilibrée dans le tissu et de l'ordre de quatre-vingt dix grammes par mètre carré pour la chaîne et pour la trame.

Un tel matériau complexe est non seulement facile à manipuler, mais permet d'assurer un maintien parfait de l'orientation des fils à hautes caractéristiques mécaniques. Il peut être utilisé comme renfort de résine polyester et il a été constaté que l'on obtenait une matière composite présentant de très bonnes caractéristiques mécaniques et que, par ailleurs et surtout, les risques de délaminage sont pratiquement totalement éliminés.

De plus, l'épaisseur du complexe de renforcement conforme à l'invention étant nettement plus importante que dans le cas d'un tissu mixte (alternance de fils de verre et d'un autre type de fils tant en chaîne qu'en trame dans un tissu), et étant dans le cas présent de l'ordre de 1,4 millimètre, les caractéristiques du matériau composite formé sont améliorées.

## Revendications

1. Matériau textile complexe pour la réalisation d'articles composites, constitué d'une structure multicouches, les différentes couches étant reliées entre elles par aiguilletage, **caractérisé** en ce qu'il comporte au moins deux couches tissées:
- dont l'une est à base de fils à hautes caractéristiques mécaniques (aramide par exemple);
- et dont l'autre est à base de fils de verre à filaments continus,
les deux couches tissées étant liées entre elles par aiguilletage, de telle sorte qu'une partie minoritaire des fibres à hautes caractéristiques mécaniques soit implantée à l'intérieur de la structure tissée en fils de verre.

2. Matériau textile complexe selon la revendication 1, caractérisé en ce que les deux tissus entrant dans sa réalisation sont constitués de fils élémentaires comportant un grand nombre de filaments, non tordus, présentant une structure relativement plane et aérée lorsqu'ils sont tissés.

## Patentansprüche

1. Komplexes textiles Material zur Herstellung von Verbundwaren, welches von einer mehrlagigen Struktur gebildet ist, deren verschiedene Lagen durch Nadelung miteinander verbunden sind, dadurch gekennzeichnet, daß es mindestens zwei gewebte Lagen umfaßt,
- von denen die eine aus Fäden mit hochwertigen mechanischen Eigenschaften (zum Beispiel Aramid) besteht
- und von denen die andere aus Glasfäden aus Endlosfasern besteht, wobei die gewebten Lagen durch Nadelung derart miteinander verbunden sind, daß ein geringer Anteil (weniger als 50%) der Fasern mit hochwertigen mechanischen Eigenschaften in das Innere der gewebten Struktur aus Glasfäden eingebracht wird.

2. Textiles Material nach Anspruch 1, dadurch gekennzeichnet, daß die beiden in seinem Aufbau enthaltenen Gewebe aus nichtgedrehten Grundfäden bestehen, die eine große Anzahl von Filamenten aufweisen und eine relativ ebene und luftige Struktur aufweisen, wenn sie verwebt sind.

## Claims

1. Composite textile material for the production of composite articles, consisting of a multilayer structure, the various layers being joined together by needling, characterized in that it comprises at least two woven layers :
- one of which is based on yarns with high mechanical performance (for example aramid);
- and the other of which is based on yarns of continuous filament glass yarns,
the two woven layers being bound together by needling so that a minor part of the high mechanical performance fibres is implanted within the woven glass yarn structure.

2. Composite textile material according to claim 1, characterized in that the two fabrics forming part of its structure consists of elementary yarns comprising a large number of filaments, not twisted, exhibiting a relatively planar and aerated structure when they are woven.
